# EUROPÄISCHE PATENTSCHRIFT

(11) **EP 3 185 486 B1**
(45) Veröffentlichungstag und Bekanntmachung des Hinweises auf die Patenterteilung: **31.07.2019**
(21) Anmeldenummer: 16205749.1
(22) Anmeldetag: 21.12.2016
(51) Int. Cl.: H04L 12/417, H04L 12/44

(54) **VERFAHREN ZUR ÜBERTRAGUNG VON NACHRICHTEN IN EINEM COMPUTERNETZWERK UND COMPUTERNETZWERK**
METHOD FOR TRANSMITTING MESSAGES IN A COMPUTER NETWORK AND COMPUTER NETWORK
PROCÉDÉ DE TRANSMISSION DE MESSAGES DANS UN RÉSEAU INFORMATIQUE ET RÉSEAU INFORMATIQUE

(30) Priorität: 23.12.2015 AT 511032015
(43) Veröffentlichungstag der Anmeldung: 28.06.2017
(73) Patentinhaber: TTTech Computertechnik AG, 1040 Wien (AT)
(72) Erfinder: Bauer, Günther, 1040 Wien (AT); Steiner, Wilfried, 1040 Wien (AT)
(74) Vertreter: Patentanwaltskanzlei Matschnig & Forsthuber OG

(56) Entgegenhaltungen:
- EP-A1- 2 871 806
- US-A- 5 802 057
- US-B1- 6 356 558

## Beschreibung

Die Erfindung betrifft ein Verfahren zur Übertragung von Nachrichten in einem Computernetzwerk, wobei das Computernetzwerk Knoten umfasst, welche über Kommunikationsleitungen miteinander verbunden sind, z.B. in dem jeweils zwei Knoten miteinander verbunden sind, und wobei die Knoten untereinander Nachrichten austauschen, und wobei Daten in Form von Nachrichten zwischen den Knoten kommuniziert werden, wobei zumindest zwei erste Knoten Daten zu einem gemeinsamen zweiten Knoten senden, wobei das Computernetzwerk derart ausgestaltet ist, dass zumindest ein erster Knoten in zumindest einem Kommunikationspfad eines weiteren ersten Sendeknotens oder der mehreren weiteren ersten Sendeknoten zu dem gemeinsamen zweiten Knoten liegt, und wobei zumindest ein erster Knoten - der sogenannte Integrations-Knoten -, der näher bei dem gemeinsamen zweiten Knoten angeordnet ist als zumindest ein weiterer erster Knoten, die Daten aus zumindest einer der Nachrichten des zumindest einen weiter vom gemeinsamen zweiten Knoten entfernten ersten Knotens in zumindest eine von dem Integrations-Knoten generierte Nachricht integriert, die dieser Integrations-Knoten an den gemeinsamen zweiten Knoten schickt.

Weiters betrifft die Erfindung ein Computernetzwerk umfassend Knoten, welche über Kommunikationsleitungen miteinander verbunden sind, z.B. in dem jeweils zwei Knoten miteinander verbunden sind, und wobei die Knoten untereinander Nachrichten austauschen, und wobei Daten in Form von Nachrichten zwischen den Knoten kommuniziert werden wobei zumindest zwei erste Knoten Daten zu einem gemeinsamen zweiten Knoten senden, wobei das Computernetzwerk derart ausgestaltet ist, dass zumindest ein erster Knoten in zumindest einem Kommunikationspfad eines weiteren ersten Sendeknotens oder der mehreren weiteren ersten Sendeknoten zu dem gemeinsamen zweiten Knoten liegt, und wobei zumindest ein erster Knoten - der sogenannte Integrations-Knoten -, der näher bei dem gemeinsamen zweiten Knoten angeordnet ist als zumindest ein weiterer erster Knoten, dazu eingerichtet ist, die Daten aus zumindest einer der Nachrichten des zumindest einen weiter vom gemeinsamen zweiten Knoten entfernten ersten Knotens in zumindest eine von dem Integrations-Knoten generierte Nachricht integriert, die dieser Integrations-Knoten an den gemeinsamen zweiten Knoten schickt.

Außerdem betrifft die Erfindung noch ein Echtzeitcomputersystem, insbesondere verteiltes Echtzeitcomputersystem, welches zumindest ein Kommunikationssystem umfasst, welches in Form eines oben genannten Computernetzwerkes ausgebildet ist.

Solche Verfahren bzw. Computersysteme sind beispielsweise aus US 6 356 558 B1, US 5 802 057 A oder EP 2 871 806 A1 bekannt.

Ein oben genanntes Computernetzwerk bildet beispielsweise das Kommunikationssystem für ein verteiltes Echtzeitsystem, oder einen Teil eines solchen Kommunikationssystems.

Über die Kommunikationsverbindungen können Knoten Nachrichten austauschen, welche Nachrichten Daten enthalten können.

Knoten könne als Sender und/oder Empfänger und/oder Weiterleitungsinstanzen von Nachrichten fungieren.

Knoten können optional Funktionen exekutieren, wie beispielsweise das Messen von Eigenschaften physikalischer Prozesse mittels geeigneter Sensorik - wozu die Knoten mit jeweils einem oder mehreren Sensoren verbunden sind und/oder solche Sensoren beinhalten -, die Berechnung von Stellgrößen, oder die Aktivierung von Aktuatoren, wie zum Beispiel Ventilen.

Bei "Daten" im Rahmen der vorliegenden Offenbarung kann es sich um Daten im engeren Sinn handeln, beispielsweise um Messwerte, die z.B. von dem Knoten oder von an den Knoten angeschlossenen Sensoren ermittelt werden, oder die Werte von Zustandsgrößen, Diagnosewerte, usw. Bei den Daten kann es sich aber auch um Befehle, z.B. Steuerungsbefehle handeln.

Allgemein können "Daten" Identifier enthalten, aufgrund welcher z.B. der Empfänger der Daten weiß, um welche Daten (Daten im eigentlichen Sinn, Befehle generell, Steuerbefehle, ...) es sich handelt. Dazu kann es von Vorteil sein, wenn die Daten als TLV-tripple (Type/Length/Value)-tripple ausgelegt sind, d.h. Daten werden mittels eines Typs, einer Länge und einem entsprechenden Wert beschrieben.

Im Rahmen des vorliegenden Textes fallen die im weiteren noch beschriebenen "Fülldaten" nicht unter den oben beschriebenen Begriff "Daten", "Fülldaten" sind somit keine "Daten" im Sinne des vorliegenden Textes.

Es ist eine Aufgabe der Erfindung, die Übertragungsdauer von Daten in einem oben genannten Computernetzwerk zu reduzieren.

Diese Aufgabe wird mit einem eingangs erwähnten Verfahren dadurch gelöst, dass erfindungsgemäß der zumindest eine Integrations-Knoten zum Zwecke dieser Integration nach der Übertragung der von ihm zu übertragenden Integrations-Knoten-eigenen Daten mit der Übertragung der zumindest einen diese Integrations-Knoten-eigenen Daten übertragenden Nachrichten, einer sogenannten Integrations-Nachricht, fortfährt, indem er entweder die zu integrierenden Daten des zumindest einen weiteren ersten Knotens und/ oder Fülldaten in diese zumindest eine Nachricht einfügt.

Kern der vorliegenden Erfindung ist, dass Nachrichten während der Weiterleitung in einem Knoten, einem sogenannten Integrations-Knoten, verändert werden können. Dadurch ergibt sich ein Vorteil gegenüber dem Stand der Technik, mit dem sich die Übertragungszeit der Daten, speziell in einem Netzwerk von Knoten, signifikant verringern lässt. Durch diese reduzierte Übertragungszeit können zum Beispiel Produktionsprozesse in bestehenden Echtzeitsystemen beschleunigt werden, sowie neuartige Anwendungen von verteilten Echtzeitsystemen gefunden werden.

Weiters wird diese Aufgabe mit einem eingangs erwähnten Computernetzwerk dadurch gelöst, dass erfindungsgemäß der zumindest eine Integrations-Knoten zum Zwecke dieser Integration nach der Übertragung der von ihm zu übertragenden Integrations-Knoten-eigenen Daten mit der Übertragung der zumindest einen diese Integrations-Knoten-eigenen Daten übertragenden Nachrichten, einer sogenannten Integrations-Nachricht, fortfährt, indem er entweder die zu integrierenden Daten des zumindest einen weiteren ersten Knotens und/ oder Fülldaten in diese zumindest eine Nachricht einfügt.

Gemäß der vorliegenden Erfindung werden Daten von ersten Knoten mittels Nachrichten zu einem gemeinsamen, zweiten Knoten übertragen. Zumindest einer dieser ersten Knoten fungiert erfindungsgemäß als Integrations-Knoten, welcher die für den zweiten Knoten bestimmten Daten in eine neue Nachricht integriert. Der Einfachheit halber wird im Rahmen der Erörterungen der Erfindung in dem vorliegenden Text davon ausgegangen, dass Nachrichten, welche ein erster Knoten sendet, ausschließlich Daten enthält, welche für den gemeinsamen zweiten Knoten bestimmt sind. Tatsächlich kann aber eine Nachricht eines ersten Knotens, welche Daten für einen gemeinsamen zweiten Knoten enthält, auch weitere Daten enthalten, die z.B. bereits für den Integrations-Knoten bestimmt sind, die dieser dann direkt verarbeitet, und/ oder Daten enthalten, die für einen Empfänger bestimmt sind, der dem gemeinsamen, zweiten Knoten nachgeordnet ist. Der Integrations-Knoten integriert dann lediglich jene Daten, die für den gemeinsamen, zweiten Knoten bestimmt sind, entsprechend der Erfindung wie oben beschrieben, die restlichen Daten aus der Nachricht werden entweder direkt verarbeitet und/ oder an den gemeinsamen zweiten Knoten weitergeleitet, z.B. mit der Nachricht, mit welcher sie in dem Integrations-Knoten eingelangt sind, und der gemeinsame zweite Knoten leitet diese Nachricht mit den verbleibenden Daten an den finalen Empfänger weiter.

Der Informationsaustausch zwischen Knoten funktioniert Nachrichten-orientiert, zum Beispiel mittels Ethernet Nachrichten auf kabelgebundenen Leitungen oder z.B. mittels Nachrichten gemäß IEEE 802.11 über kabellose/drahtlose Kommunikationsverbindungen.

Vorteilhafte Ausführungsformen des erfindungsgemäßen Verfahrens bzw. Computernetzwerkes, die für jede für sich oder in beliebiger Kombination miteinander realisiert sein können, sind im Folgenden aufgeführt:
- Fülldaten werden entsprechend einem definierten Muster in die zumindest eine Integrations-Nachricht integriert. Dieses definierte Muster, insbesondere ein Bitmuster, muss eindeutig zumindest vom letzten empfangenden Knoten als solches erkennbar sein. Das kann dadurch erreicht werden, dass sich die Knoten per Konfiguration auf ein Bitmuster einigen. Idealerweise handelt es sich um ein Bitmuster, das nicht in der Codierung von den Nutzdaten vorkommt, sodass nicht zufällig Nutzdaten für das Bitmuster gehalten werden können;
- die von den zumindest zwei ersten und dem gemeinsamen zweiten Knoten übertragenen Daten enthalten Prüfsummen. Die Prüfsumme wird dabei vorzugsweise jeweils über die jeweiligen Daten gebildet;
- die zumindest zwei ersten und der zweite Knoten können Nachrichten zeitgesteuert übertragen, beispielsweise können sie Nachrichten zu konfigurierten Zeitpunkten in einer globalen Zeit übertragen;
- sendende Knoten haben den gleichen Zeitpunkt für die Übertragung, vorzugsweise für den Sende-Zeitpunkt, zumindest jeweils einer ihrer Nachrichten, konfiguriert. Es ist von Vorteil, wenn alle Daten sendenden Knoten zueinander synchronisiert sind. Die ersten Knoten sind sendende Knoten und synchronisiert, der zweite, empfangende Knoten kann der Endpunkt der Datenübertragung sein, in welchem Fall er nicht synchronisiert sein muss, oder, wenn er selbst der Sender von Daten in das Netzwerk ist, ist es von Vorteil, wenn auch dieser zweite Knoten synchronisiert ist, wenn er also Nachrichten zum selben Zeitpunkt wie die ersten Knoten zu senden beginnt;
- der zumindest eine Integrations-Knoten wartet eine konfigurierbare oder konfigurierte Zeitdauer ab, und wenn innerhalb dieser Zeitdauer Daten von zumindest einem weiteren ersten Knoten einzulangen beginnen, integriert der Integrations-Knoten diese Daten in die von ihm generierte Nachricht bzw. beginnt zu integrieren, vorzugsweise unmittelbar nach den Integrations-Knoten-eigenen Daten oder anschließend an Fülldaten, welche den Integrations-Knoten-eigenen Daten folgen, und
- wenn innerhalb dieser Zeitdauer keine Daten von weiteren ersten Knoten einzulangen beginnen, terminiert der Integrations-Knoten die von ihm generierte Nachricht und überträgt diese an einen Empfänger. Die Zeitdauer wird dabei vom Sendebeginn der Integrations-Knoten-Nachricht gemessen. Die obere Schranke, d.h. die Zeitdauer, die der Integrations-Knoten wartet, kann z.B. durch die maximal erlaubte Länge der Nachricht, die der Integrationsknoten versenden kann, festgelegt sein. In diesem Zusammenhang könnte der Fall eintreten, dass kurz vor Erreichen der maximalen Länge der Nachricht von einem ersten Knoten eine Nachricht mit Daten in dem Integrations-Knoten einlangt. In diesem Fall kann der Integrations-Knoten mit dem Integrieren von Daten beginnen, bis die maximale Länge der Nachricht erreicht ist;
- der zumindest eine Integrations-Knoten integriert von zumindest einem weiteren ersten Knoten einlangende Fülldaten in die von ihm generierte Nachricht, oder vorzugsweise integriert es diese Fülldaten nicht und verwirft sie. Letzteres ist beispielsweise dann möglich, wenn es die zeitliche Konstellation von einlangenden Daten, Fülldaten und ausgehender, generierter Nachricht erlaubt.

In Ethernet ist die maximale Nachrichtenlänge z.B. ca. 1518 Bytes, wobei es auch Jumboframes gibt mit z.B. 9216 Bytes. Es könnte aber auch vorgesehen sein, dass die konfigurierte bzw. konfigurierbare Zeitdauer lediglich einem Byte entspricht. Typische Werte für die Zeitdauer entsprechend somit einer Länge von 1Byte - 1518 Bytes oder 1 Byte - 9216 Bytes.

Es kann auch vorgesehen sein, dass die Zeitdauer der Präzision der Synchronisation, d.h. die maximale Zeitdifferenz zwischen zwei nicht fehlerhaften lokalen Uhren in den Knoten, entspricht.

Im Folgenden ist die Erfindung an Hand der Zeichnung an Hand einer beispielhaften Realisierung näher erörtert. Es zeigt
Fig. 1 ein erstes schematisches Beispiel eines einfachen Computernetzwerkes umfassend drei Knoten,
Fig. 1a ein Beispiel einer Datenübertragung nach dem Stand der Technik in dem Netzwerk aus Figur 1,
Fig. 1b ein Beispiel einer Datenübertragung gemäß der Erfindung in dem Netzwerk aus Figur 1,
Fig. 1c ein ähnliches Kommunikationsszenario wie in Figur 1b gezeigt,
Fig. 2 ein zweites schematisches Beispiel eines einfachen Computernetzwerkes umfassend sechs Knoten,
Fig. 3 ein drittes Beispiel eines einfachen Netzwerkes mit vier Knoten,
Fig. 3a ein Beispiel einer Datenübertragung gemäß der Erfindung in dem Netzwerk aus Figur 3,
Fig. 4 eine weiteres Kommunikationsszenario in einem Netzwerk gemäß Figur 3,
Fig. 5 ein Beispiel für ein Muster von Fülldaten, und
Fig. 6 ein weiteres Kommunikationsszenario in einem Netzwerk gemäß Figur 3.

Die im Folgenden beschriebenen Netzwerke umfassen jeweils eine Anzahl von Knoten, wobei Knoten mittels Kommunikationsverbindungen verbunden sind. Die Kommunikationsverbindung zwischen zwei Knoten kann dabei drahtlos oder draht- bzw. kabelgebunden erfolgen, in den folgenden Beispielen wird von kabelgebundenen, insbesondere bi-direktionalen kabelgebundenen Kommunikationsleitungen ausgegangen.

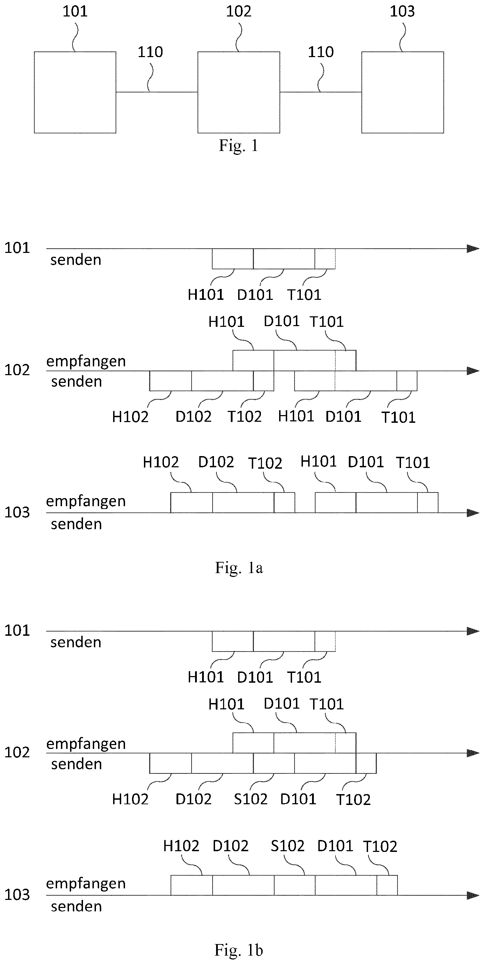

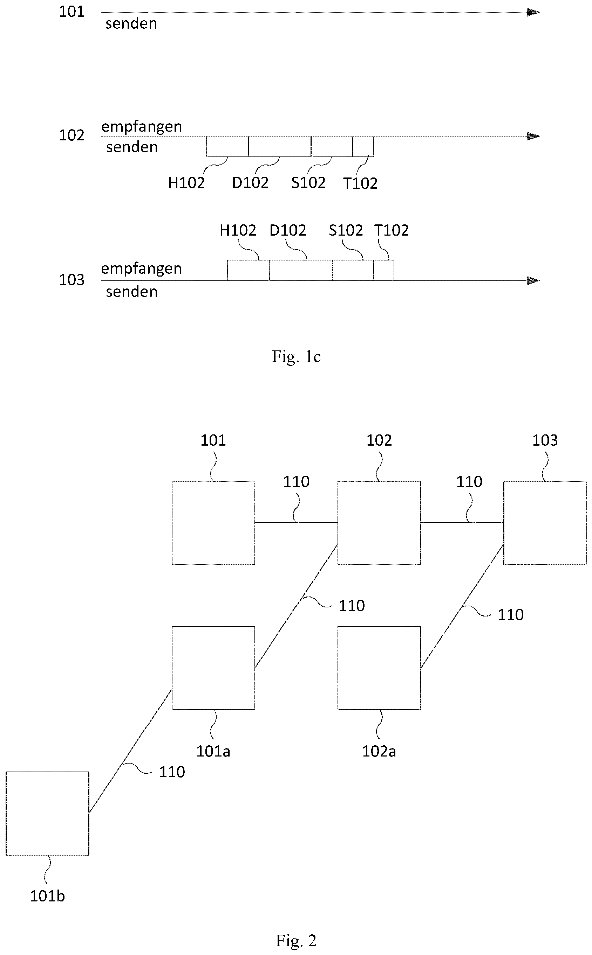

Figur 1 zeigt ein erstes Beispiel eines Netzwerks, welches Knoten 101 - 103 umfasst, die wie mittels kabelgebundener bi-direktionaler Kommunikationsleitungen 110 miteinander verbunden sind. Dabei ist Knoten 101 mit Knoten 102 und dieser wiederum mit Knoten 103 verbunden. Knoten können mittels Sensoren mit der Umwelt verbunden sein. Knoten können Daten untereinander austauschen, zum Beispiel aktuelle Messwerte der Sensoren. Die Daten werden dazu in Nachrichten verpackt und über die Kommunikationsleitungen verschickt.

In einer speziellen Konfiguration des Netzwerks fungiert ein Knoten, in diesem Fall Knoten 103 als Empfänger und die anderen Knoten 101, 102 als Sender. Grundsätzlich können Knoten als Sender, Empfänger, Weiterleitungsinstanzen oder als Sender und Weiterleitungsinstanz fungieren. Dementsprechend könnten zwischen den Knoten auch z.B. Weiterleitungsinstanzen angeordnet sein, oder der Empfänger 103 könnte in einem größeren Netzwerk selbst wieder als Sender fungieren. Dies ist aber für die Beschreibung der Erfindung unerheblich, der Einfachheit halber wird daher nur von Netzwerken mit Sendern und Empfängern ausgegangen.

In **Figur 1a** ist ein Beispiel einer üblichen Datenübertragung in dem Netzwerk gemäß **Figur 1** dargestellt, auf der Abszisse ist dabei die Zeit dargestellt. Die beiden "ersten" Knoten 101 und Knoten 102 senden Nachrichten, welche Daten D101, D102 enthalten, an einen gemeinsamen "zweiten" Knoten 103. Die Nachricht des Knotens 101 setzt sich beispielsweise zusammen aus einem Nachrichten-Beginn H101, den zu kommunizierenden Daten D101 des Knotens 101, sowie einem Nachrichten Ende T101. Die Nachricht des Knotens 102 setzt sich aus einem Nachrichten-Beginn H102, den zu kommunizierenden Daten D102 des Knotens 102, sowie einem Nachrichten Ende T102 zusammen.

Konkret kann zum Beispiel Ethernet als Nachrichten-basiertes Übertragungsverfahren implementiert werden. In Ethernet finden sich Nachrichten-Strukturen wie folgt:
- Nachrichten Beginn H101, H102: Ethernet Header
- Nachrichten Daten D101, D102: Ethernet Payload
- Nachrichten Ende T101, T102: Ethernet CRC

Wie in **Figur 1a** dargestellt sendet Knoten 101 die Nachricht bestehend aus H101, D101, T101 an den Knoten 102. Knoten 102 sendet zuerst die Nachricht mit "seinen" Daten D102, bestehend aus H102, D102, T102, an Knoten 103 und leitet im Anschluss daran die Nachricht von Knoten 101, bestehend aus H101, D101, T101 weiter an Knoten 103. Zwischen den beiden Nachrichten kann es notwendig sein, einen Minimal-Abstand zwischen den Sendevorgängen einzuhalten. Zum Beispiel wird in Ethernet dazu die Inter-Frame Gap (IFG) definiert.

In **Figur 1b** ist eine neuartige Datenübertragung dargestellt. Hier wird das gleiche Ausgangszenario beschrieben wie in **Figur 1****:** der "erste" Knoten 101 soll die Daten D101 an den Knoten 103 übermitteln. Der weitere "erste" Knoten 102 soll die Daten D102 an den "zweiten" Knoten 103 übermitteln. Im Unterschied zu dem Szenario in **Figur 1a** führt einer der ersten Knoten 102, nämlich jener erste Knoten, der in der Kommunikationsstrecke am nächsten beim gemeinsamen zweiten Knoten 103 angeordnet ist, der sogenannte Integrations-Knoten, hier eine Integration der Daten D101 in die von Knoten 102 mit den Daten D102 in Übertragung befindliche Nachricht aus und überträgt somit die Daten D101, D102 der beiden ersten Knoten 101, 102 in nur einer Nachricht an Knoten 103. Konkret schickt Knoten 101 seine Nachricht bestehend aus H101, D101, T101 an den Knoten 102. Dieser beginnt bereits vor dem Beginn des Empfangs der Nachricht von Knoten 101 mit dem Versenden seiner Nachricht mit "seinen" Daten D102. Knoten 102 sendet daher H102, D102, beendet die Übertragung seiner Nachricht aber nicht sofort nach D102 mit T102, sondern fährt mit der Übertragung der Nachricht fort, indem der Knoten 102 Fülldaten S102 in die Nachricht einfügt. Sobald die Daten D101 von Knoten 101 bereit zum Versenden sind, kann, gegebenenfalls nach geeignetem Abschluss der Fülldaten S102, damit begonnen werden, dass der Knoten 102 die Daten D101 versendet, indem der diese in die in Übertragung befindliche Nachricht einfügt. Nach D101 kann der Knoten 102 auf weitere Daten warten, gegebenenfalls wieder separiert durch Fülldaten oder (wie in **Figur 1b** dargestellt) die Nachricht mit dem Nachrichten Ende T102 beenden.

Header H101 ebenso wie Nachrichtenende T101 der Nachricht D101 werden nicht weiter versendet, sodass nur ein Teil der die Daten D101 transportierenden Nachricht weiter versendet werden muss.

Unter dem Begriff "seine" oder "die" Daten eines Knotens sind Daten zu verstehen, die ihren Ursprung originär in diesem Knoten haben, entweder indem dieser Knoten diese Daten generiert oder z.B. von Sensoren, die an diesen Knoten angeschlossen sind, stammen. Daten, die von einem anderen Knoten stammen, fallen nicht unter diese Begriffe.

In **Figur 1c** ist ein ähnliches Kommunikationsszenario wie in **Figur 1b** beschrieben. Der Unterschied zu dem Szenario aus **Figur 1b** besteht darin, dass der erste Knoten 101 keine Nachricht an den gemeinsamen zweiten Knoten 103 sendet. Wie in **Figur 1c** dargestellt, sendet der weitere erste Knoten 102 eine Nachricht an Knoten 103, welche H102, anschließend die Daten D102, gefolgt von Fülldaten S102 enthält. Nach einer gewissen Zeit, welche vorzugsweise vorab konfiguriert ist, erkennt Knoten 102, dass keine Daten von Knoten 101 empfangen werden, beendet das Schreiben von Fülldaten S102 in die Nachricht und terminiert die Nachricht mit dem Nachrichtenende T102.

In **Figur 2** ist ein weiteres Beispiel eines Netzwerks dargestellt, in dem Knoten 101 - 103, 101a, 101b, 102a mit Kommunikationsverbindungen, beispielsweise mittels kabelgebundener bi-direktionaler Kommunikationsleitungen 110 miteinander verbunden sind. Knoten können mittels Sensoren mit der Umwelt verbunden sein. Knoten können Daten untereinander austauschen, zum Beispiel aktuelle Messwerte der Sensoren. Die Daten werden dazu in Nachrichten verpackt und mittels der Kommunikationsleitungen verschickt.

In der gezeigten beispielhaften Konfiguration eines Netzwerks kann beispielsweise ein Knoten, nämlich Knoten 103 als "zweiter" Knoten, d.h. als Empfänger, und die anderen Knoten 101, 102, 101a, 101b, 102a als Sender, Weiterleitungsinstanzen, oder Sender und Weiterleitungsinstanzen fungieren. Es könnte in einem **ersten Beispiel** vorgesehen sein, dass
- die ersten Knoten 101, 102, 101b Daten an den gemeinsamen zweiten Knoten 103 senden, wobei Knoten 101a lediglich als Weiterleitungsinstanz für Nachrichten von Knoten 101b fungiert, und
- der Knoten 102, der auf Grund seiner Lage als Integrations-Knoten fungiert, die für Knoten 103 bestimmten Daten von Knoten 101 und 101b in eine von Knoten 102 ausgehende Nachricht integriert und an Knoten 103 sendet.

In einem **zweiten Beispiel** könnte vorgesehen sein, dass
- die ersten Knoten 101, 102, 101a Daten an den gemeinsamen zweiten Knoten 103 senden, und
- der Knoten 102, der auf Grund seiner Lage als Integrations-Knoten fungiert, die für Knoten 103 bestimmten Daten von Knoten 101 und 101a in eine von Knoten 102 ausgehende Nachricht integriert und an Knoten 103 sendet.
- Knoten 101b hat in diesem Beispiel keine erfindungsgemäße Funktion, dieser könnte beispielsweise Nachrichten an einen (nicht dargestellten) Knoten nach Knoten 103 senden, wobei die Knoten 101a, 102, 103 lediglich als Weiterleitungsinstanzen dienen.

In einem **dritten Beispiel** könnte vorgesehen sein, dass
- die ersten Knoten 101, 102, 101a, 101b Daten an den gemeinsamen zweiten Knoten 103 senden, und
- der Knoten 101a als Integrations-Knoten fungiert und die Daten von Knoten 101b in eine bei ihm ausgehende Nachricht integriert, und
- der Knoten 102 die für Knoten 103 bestimmten Daten von Knoten 101 und die in der Nachricht von Knoten 101a enthaltenen Daten von Knoten 101a und Knoten 101b in eine von Knoten 102 ausgehende Nachricht integriert und an Knoten 103 sendet.

In einem **vierten Beispiel** könnte vorgesehen sein, dass
- die ersten Knoten 101, 102, 101a, 101b, 102a, 103 Daten an einen gemeinsamen zweiten, nicht dargestellten Knoten senden, und
- Knoten 101a Daten von Knoten 101b integriert,
- Knoten 102 Daten von Knoten 101, 101b, 101a integriert, und
- Knoten 103 Daten von Knoten 102, 101, 101b, 101a integriert, und
- eine Nachricht mit den Daten der Knoten 103, 102, 101, 101b, 101a an den nicht dargestellten zweiten gemeinsamen Knoten überträgt.

Die aufgeführten Beispiele sind als rein beispielhaft und erläuternd anzusehen, für den Fachmann ist klar, dass es im Rahmen der Erfindung noch andere als die oben beschriebenen vier Möglichkeiten der Realisierung gibt, die aber der Kürze halber hier nicht beschrieben sind.

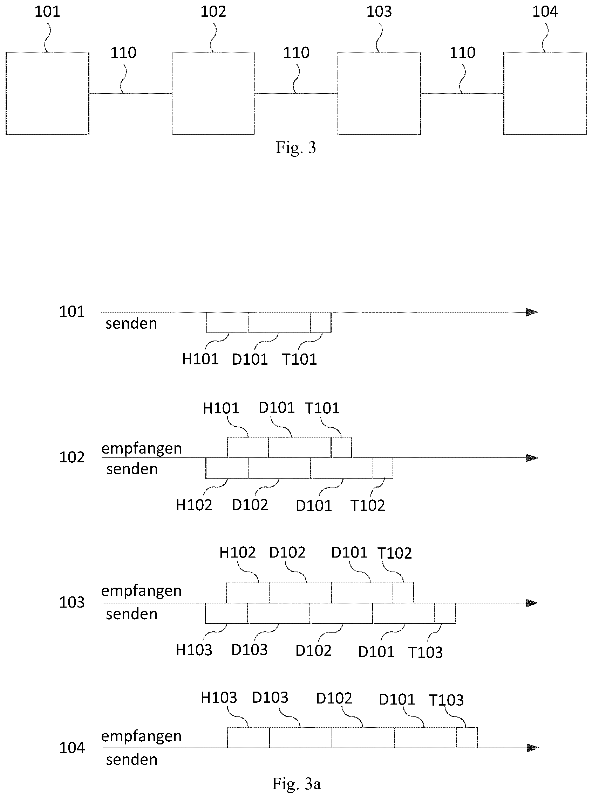

**Figur 3** zeigt ein weiteres beispielhaftes Netzwerk ähnlich zu jenem aus **Figur 1****,** nun mit vier Knoten 101 - 104, wobei die Knoten in der Reihe 101 - 102, 102 - 103, 103 - 104 mittels Kommunikationsverbindungen, z.B. mit bi-direktionalen Kommunikationsleitungen 110 verbunden sind.

**Figur 3a** zeigt ein beispielhaftes Kommunikationsszenario in einem Netzwerk mit der Topologie aus **Figur 3****.** Die Knoten 101, 102, 103, sollen dabei Daten an den Knoten 104 (Empfänger) senden. In diesem Beispiel sind die Knoten 101, 102, 103 synchronisiert zueinander, sodass sie zum gleichen Zeitpunkt mit den jeweiligen Nachrichtenübertragungen beginnen. Wie dargestellt, senden nun die beiden "ersten" Knoten 101, 102 Daten D101, D102 mit Nachrichten an den für die beiden "ersten" Knoten 101, 102 gemeinsamen "zweiten" Knoten 103. Knoten 102 ist dabei im Kommunikationspfad von Knoten 101 näher beim "zweiten" Knoten 103 und fungiert somit als Integrator, d.h. Knoten 102 integriert die Daten D101 des einen ersten Knotens 101 in jene Nachricht, mit welcher der weitere "erste" Knoten 102 "seine" Daten D102 an den gemeinsamen Knoten 103 überträgt.

Knoten 102 und Knoten 103 stellen "erste" Knoten für Knoten 104 dar, welcher wiederum den gemeinsamen "zweiten" Knoten für diese beiden "ersten" Knoten 102, 103 darstellt. Knoten 103 integriert nun die aus der Nachricht von Knoten 102 kommenden Daten, d.h. die Daten D101, D102, sowie seine Daten D103 in eine gemeinsame Nachricht, welche Nachricht Knoten 103 an Knoten 104 sendet. Konkret integriert der gemeinsame "zweite" Knoten 103 die mit der Nachricht von Knoten 102 empfangenen Daten D101, D102 in jene Nachricht, welche er gleichzeitig mit dem Beginn der Übertragung der Nachrichten von Knoten 101 und Knoten 102 begonnen hat zu übertragen, und welche unter anderem seine Daten D103 enthält.

In diesem Beispiel wird angenommen, dass keine Fülldaten notwendig sind. Das kann zum Beispiel dann der Fall sein, wenn dem Empfänger 104 bereits vor dem Empfang der Nachricht bekannt ist, wie lange die Daten D101, D102, D103 sind, sowie sichergestellt ist, dass die Knoten 102, 103, welche die Integration der Daten durchführen, die jeweils zu integrierenden Daten D101, D102 rechtzeitig vor der Integration empfangen haben.

Knoten 103 sendet somit eine Nachricht mit H103, D103, D102, D101, T103 an Knoten 104, der diese Nachricht etwas später empfängt.

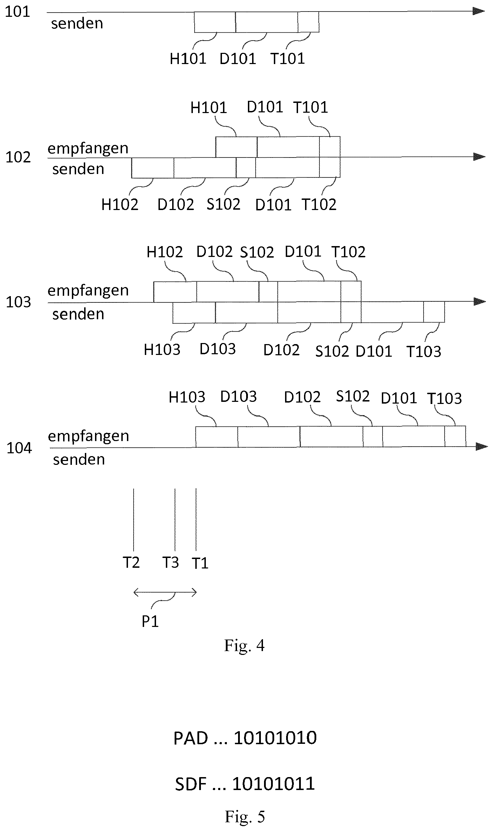

In **Figur 4** ist ein weiteres Kommunikationsszenario dargestellt, in dem Knoten 101, 102, 103, 104 entsprechend der Topologie in **Figur 3** angeordnet sind. Knoten 101, 102, 103 sollen Daten an Knoten 104 senden. In diesem Beispiel sind die Knoten 101, 102, 103 synchronisiert zueinander, sodass sie zum gleichen Zeitpunkt mit den jeweiligen Nachrichtenübertragungen beginnen. In diesem Beispiel wird allerdings angenommen, dass die Synchronisation nicht perfekt ist, sodass die Knoten zueinander nur ungefähr synchronisiert sind. Das bedeutet, dass zu jedem Zeitpunkt in Echtzeit die lokalen Uhren der Knoten einen Unterschied von maximal P1 Zeiteinheiten zueinander haben. Aus der Ungenauigkeit P1 der Synchronisation ergibt sich, dass die Knoten 101, 102, 103 zu unterschiedlichen Zeitpunkten T1, T2, T3 mit der Übertragung ihrer Daten beginnen.

Wie dargestellt, kann es in diesem Fall notwendig sein, dass Integrations-Knoten beim Weiterleiten Fülldaten in jene Nachrichten, in welche Daten von einem oder mehreren anderen Knoten integriert werden, einfügen, z.B. fügt der Integrations-Knoten 102 Fülldaten S102 solange ein, bis die Daten D101 des weiteren ersten Knotens 101 beginnen bei ihm einzulangen, sodass er diese dann anschließend an die Fülldaten S102 in die Nachricht, mit welcher er seine Daten D102 an den gemeinsamen, zweiten Knoten 103 überträgt, integrieren kann. Die Fülldaten S102 befinden sich somit zwischen den Daten D101 und D102 in der Nachricht, die Knoten 102 zu Knoten 103 überträgt.

In der gezeigten zeitlichen Konstellation ist es nicht notwendig, dass auch der Integrations-Knoten 103 Fülldaten einfügt, da zum Zeitpunkt, da seine Daten D103 vollständig in die zu übertragende Nachricht integriert sind, bereits Daten aus der von Knoten 102 einlangenden Nachricht bei ihm eingetroffen sind, sodass der Integrations-Knoten 103 unmittelbar anschließend an seine Daten D103 die Daten D102, Fülldaten S102 und Daten D101 aus der Nachricht von Knoten 102 in die Nachricht mit seinen Daten D103 integrieren kann.

Der Integrations-Knoten 103 sendet somit eine Nachricht bestehend aus H103, D103, D102, S102, D101, T103 an Knoten 104.

**Figur 5** zeigt eine Möglichkeit der Gestaltung der Fülldaten S102. Die Fülldaten setzen sich in diesem Fall aus einer Wiederholung PAD von "0" und "1" Symbolen zusammen, die beliebig lang fortgeführt werden kann. Optional kann zwischen den PAD-Fülldaten und den darauf folgenden Daten D101, D102 eine Trennsequenz SDF versendet werden, die eindeutig das Ende der Fülldaten S102 von den Daten D101, D102, D103 unterscheidet. Dazu kann es von Vorteil sein, wenn die Fülldaten als TLV-tripple (Type/Length/Value)-tripple ausgelegt sind, d.h. Fülldaten werden mittels eines Typs, einer Länge und einem entsprechenden Wert beschrieben.

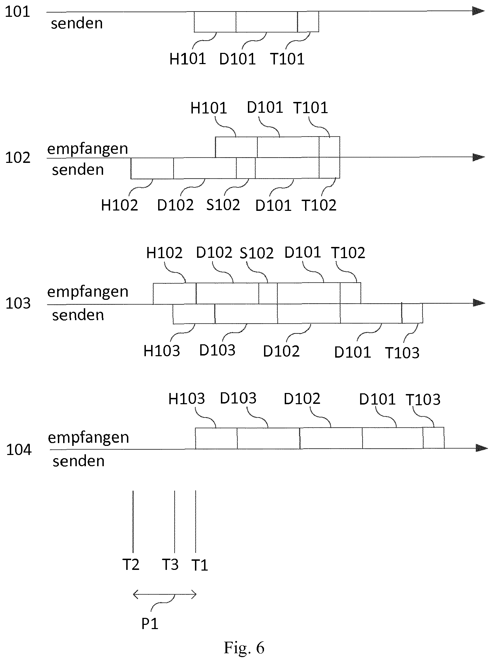

In **Figur 6** ist ein weiteres Kommunikationsszenario dargestellt, in dem Knoten 101, 102, 103, 104 entsprechend der Topologie in **Figur 3** angeordnet sind. Knoten 101, 102, 103 sollen Daten an Knoten 104 senden. In diesem Beispiel sind die Knoten 101, 102, 103 synchronisiert zueinander, sodass sie zum gleichen Zeitpunkt mit den jeweiligen Nachrichtenübertragungen beginnen. In diesem Beispiel wird allerdings angenommen, dass die Synchronisation nicht perfekt ist, sodass die Knoten zueinander nur ungefähr synchronisiert sind. Das bedeutet, dass zu jedem Zeitpunkt in Echtzeit die lokalen Uhren der Knoten einen Unterschied von maximal P1 Zeiteinheiten zueinander haben. Aus der Ungenauigkeit P1 der Synchronisation ergibt sich, dass die Knoten 101, 102, 103 zu unterschiedlichen Zeitpunkten T1, T2, T3 mit der Übertragung ihrer Daten beginnen.

Wie dargestellt, kann es in diesem Fall notwendig sein, dass Integrations-Knoten beim Weiterleiten Fülldaten in jene Nachrichten, in welche Daten von einem oder mehreren anderen Knoten integriert werden, einfügen, z.B. fügt der Integrations-Knoten 102 Fülldaten S102 solange ein, bis die Daten D101 des weiteren ersten Knotens 101 beginnen bei ihm einzulangen, sodass er diese dann anschließend an die Fülldaten S102 in die Nachricht, mit welcher er seine Daten D102 an den gemeinsamen, zweiten Knoten 103 überträgt, integrieren kann. Die Fülldaten S102 befinden sich somit zwischen den Daten D101 und D102 in der Nachricht, die Knoten 102 zu Knoten 103 überträgt.

In der gezeigten zeitlichen Konstellation ist es nicht notwendig, dass auch der Integrations-Knoten 103 Fülldaten einfügt, da zum Zeitpunkt, da seine Daten D103 vollständig in die zu übertragende Nachricht integriert sind, bereits Daten aus der von Knoten 102 einlangenden Nachricht bei ihm eingetroffen sind. Tatsächlich ist es dem Integrations-Knoten 103 in der dargestellten zeitlichen Konstellation sogar möglich, die Fülldaten S102 bei der Integration wieder zu verwerfen, sodass der Integrations-Knoten 103 unmittelbar anschließend an seine Daten D103 die Daten D102 und Daten D101 aus der Nachricht von Knoten 102 in die Nachricht mit seinen Daten D103 integrieren kann.

Der Integrations-Knoten 103 sendet somit eine Nachricht bestehend aus H103, D103, D102, D101, T103 an Knoten 104.

Die zu übertragenden Daten D101, D102, D103, können optional eine Prüfsumme enthalten, zum Beispiel einen Cyclic Redundancy Check. Ein Empfänger der Daten kann entsprechend der Prüfsumme Übertragungsfehler erkennen. Dadurch ermöglicht die Erfindung, dass ein Empfänger 104 die Daten D101, D102, D103 verwenden kann, ohne das Nachrichten Ende T103 abwarten zu müssen.

## Patentansprüche

1. Verfahren zur Übertragung von Nachrichten in einem Computernetzwerk, wobei das Computernetzwerk Knoten (101, 102, 103, 104, 101a, 101b, 102a) umfasst, welche über Kommunikationsleitungen (110) miteinander verbunden sind, z.B. in dem jeweils zwei Knoten miteinander verbunden sind, und wobei die Knoten (101, 102, 103, 104, 101a, 101b, 102a) untereinander Nachrichten austauschen, und wobei Daten (D101, D102, D103) in Form von Nachrichten zwischen den Knoten kommuniziert werden, und wobei
zumindest zwei erste Knoten (101, 102; 102, 103) Daten (D101, D102; D102, D103) zu einem gemeinsamen zweiten Knoten (103; 104) senden, wobei das Computernetzwerk derart ausgestaltet ist, dass zumindest ein erster Knoten (102; 103) in zumindest einem Kommunikationspfad eines weiteren ersten Sendeknotens (101; 102) oder der mehreren weiteren ersten Sendeknoten zu dem gemeinsamen zweiten Knoten (103; 104) liegt, und wobei
zumindest ein erster Knoten (102; 103) - der sogenannte Integrations-Knoten (102; 103) -, der näher bei dem gemeinsamen zweiten Knoten (103; 104) angeordnet ist als zumindest ein weiterer erster Knoten (101; 102), die Daten (D101; D102) aus zumindest einer der Nachrichten des zumindest einen weiter vom gemeinsamen zweiten Knoten (103; 104) entfernten ersten Knotens (101; 102) in zumindest eine von dem Integrations-Knoten (102; 103) generierte Nachricht integriert, die dieser Integrations-Knoten (102; 103) an den gemeinsamen zweiten Knoten (103; 104) schickt, **dadurch gekennzeichnet, dass**
der zumindest eine Integrations-Knoten (102; 103) zum Zwecke dieser Integration nach der Übertragung der von ihm zu übertragenden Integrations-Knoten-eigenen Daten (D102; D103) mit der Übertragung der zumindest einen diese Integrations-Knoten-eigenen Daten (D102; D103) übertragenden Nachrichten, einer sogenannten Integrations-Nachricht, fortfährt, indem er entweder die zu integrierenden Daten (D101; D102) des zumindest einen weiteren ersten Knotens (101; 102) und/oder Fülldaten (S102) in diese zumindest eine Nachricht einfügt.

2. Verfahren nach Anspruch 1, **dadurch gekennzeichnet, dass** Fülldaten (S102) entsprechend einem definierten Muster (PAD, SDF) in die zumindest eine Integrations-Nachricht integriert werden.

3. Verfahren nach Anspruch 1 oder 2, **dadurch gekennzeichnet, dass** die von den zumindest zwei ersten und dem gemeinsamen zweiten Knoten übertragenen Daten (D101, D102, D103) Prüfsummen enthalten.

4. Verfahren nach einem der Ansprüche 1 bis 3, **dadurch gekennzeichnet, dass** die zumindest zwei ersten und der zweite Knoten (101, 102, 103) Nachrichten zeitgesteuert übertragen können, beispielsweise Nachrichten zu konfigurierten Zeitpunkten (T1, T2, T3) in einer globalen Zeit übertragen.

5. Verfahren nach Anspruch 4, **dadurch gekennzeichnet, dass** sendende Knoten (101, 102,103) den gleichen Zeitpunkt (T1, T2, T3) für die Übertragung, vorzugsweise für den Sende-Zeitpunkt, zumindest jeweils einer ihrer Nachrichten konfiguriert haben.

6. Verfahren nach einem der Ansprüche 1 bis 5, **dadurch gekennzeichnet, dass** der zumindest eine Integrations-Knoten (102; 103) eine konfigurierbare oder konfigurierte Zeitdauer abwartet, und
- wenn innerhalb dieser Zeitdauer Daten (D101; D102) von zumindest einem weiteren ersten Knoten (101; 102) einzulangen beginnen, der Integrations-Knoten (102; 103) diese Daten (D101; D102) in die von ihm generierte Nachricht integriert bzw. zu integrieren beginnt, vorzugsweise unmittelbar nach den Integrations-Knoten-eigenen Daten (D103) oder anschließend an Fülldaten (S102), welche den Integrations-Knoten-eigenen Daten (D103) folgen, und
- wenn innerhalb dieser Zeitdauer keine Daten (D101; D102) von weiteren ersten Knoten (101; 102) einzulangen beginnen, der Integrations-Knoten (102; 103) die von ihm generierte Nachricht terminiert und an einen Empfänger (103; 104) überträgt.

7. Verfahren nach einem der Ansprüche 1 bis 6, **dadurch gekennzeichnet, dass** der zumindest eine Integrations-Knoten (102; 103) von zumindest einem weiteren ersten Knoten (101; 102) einlangende Fülldaten (S102) in die von ihm generierte Nachricht integriert oder vorzugsweise nicht integriert.

8. Computernetzwerk umfassend Knoten (101, 102, 103, 104, 101a, 101b, 102a), welche über Kommunikationsleitungen (110) miteinander verbunden sind, z.B. in dem jeweils zwei Knoten miteinander verbunden sind, und wobei die Knoten (101, 102, 103, 104, 101a, 101b, 102a) untereinander Nachrichten austauschen, und wobei Daten (D101, D102, D103) in Form von Nachrichten zwischen den Knoten kommuniziert werden, und wobei
zumindest zwei erste Knoten (101, 102; 102, 103) Daten (D101, D102; D102, D103) zu einem gemeinsamen zweiten Knoten (103; 104) senden, wobei das Computernetzwerk derart ausgestaltet ist, dass zumindest ein erster Knoten (102; 103) in zumindest einem Kommunikationspfad eines weiteren ersten Sendeknotens (101; 102) oder der mehreren weiteren ersten Sendeknoten zu dem gemeinsamen zweiten Knoten (103; 104) liegt, und wobei
zumindest ein erster Knoten (102; 103) - der sogenannte Integrations-Knoten (102; 103) -, der näher bei dem gemeinsamen zweiten Knoten (103; 104) angeordnet ist als zumindest ein weiterer erster Knoten (101; 102), dazu eingerichtet ist, die Daten (D101; D102) aus zumindest einer der Nachrichten des zumindest einen weiter vom gemeinsamen zweiten Knoten (103; 104) entfernten ersten Knotens (101; 102) in zumindest eine von dem Integrations-Knoten (102; 103) generierte Nachricht integriert, die dieser Integrations-Knoten (102; 103) an den gemeinsamen zweiten Knoten (103; 104) schickt, **dadurch gekennzeichnet**, das
der zumindest eine Integrations-Knoten (102; 103) zum Zwecke dieser Integration nach der Übertragung der von ihm zu übertragenden Integrations-Knoten-eigenen Daten (D102; D103) mit der Übertragung der zumindest einen diese Integrations-Knoten-eigenen Daten (D102; D103) übertragenden Nachrichten, einer sogenannten Integrations-Nachricht, fortfährt, indem er entweder die zu integrierenden Daten (D101; D102) des zumindest einen weiteren ersten Knotens (101; 102) und/ oder Fülldaten (S102) in diese zumindest eine Nachricht einfügt.

9. Computernetzwerk nach Anspruch 8, **dadurch gekennzeichnet, dass** Fülldaten (S102) entsprechend einem definierten Muster (PAD, SDF) in die zumindest eine Integrations-Nachricht integriert werden.

10. Computernetzwerk nach Anspruch 8 oder 9, **dadurch gekennzeichnet, dass** die von den zumindest zwei ersten und dem gemeinsamen zweiten Knoten übertragenen Daten (D101, D102, D103) Prüfsummen enthalten.

11. Computernetzwerk nach einem der Ansprüche 8 bis 10, **dadurch gekennzeichnet, dass** die zumindest zwei ersten und der zweite Knoten (101, 102, 103) Nachrichten zeitgesteuert übertragen können, beispielsweise Nachrichten zu konfigurierten Zeitpunkten (T1, T2, T3) in einer globalen Zeit übertragen.

12. Computernetzwerk nach Anspruch 11, **dadurch gekennzeichnet, dass** sendende Knoten (101, 102, 103) den gleichen Zeitpunkt (T1, T2, T3) für die Übertragung, vorzugsweise für den Sende-Zeitpunkt, zumindest jeweils einer ihrer Nachrichten konfiguriert haben.

13. Computernetzwerk nach einem der Ansprüche 8 bis 12 **dadurch gekennzeichnet, dass** der zumindest eine Integrations-Knoten (102; 103) eine konfigurierbare oder konfigurierte Zeitdauer abwartet, und
- wenn innerhalb dieser Zeitdauer Daten (D101; D102) von zumindest einem weiteren ersten Knoten (101; 102) einzulangen beginnen, der Integrations-Knoten (102; 103) diese Daten (D101; D102) in die von ihm generierte Nachricht integriert bzw. zu integrieren beginnt, vorzugsweise unmittelbar nach den Integrations-Knoten-eigenen Daten (D103) oder anschließend an Fülldaten (S102), welche den Integrations-Knoten-eigenen Daten (D103) folgen, und
- wenn innerhalb dieser Zeitdauer keine Daten (D101; D102) von weiteren ersten Knoten (101; 102) einzulangen beginnen, der Integrations-Knoten (102; 103) die von ihm generierte Nachricht terminiert und an einen Empfänger (103; 104) überträgt.

14. Computernetzwerk nach einem der Ansprüche 8 bis 13, **dadurch gekennzeichnet, dass** der zumindest eine Integrations-Knoten (102; 103) von zumindest einem weiteren ersten Knoten (101; 102) einlangende Fülldaten (S102) in die von ihm generierte Nachricht integriert oder vorzugsweise nicht integriert.

15. Echtzeitcomputersystem, insbesondere verteiltes Echtzeitcomputersystem, welches zumindest ein Kommunikationssystem umfasst, **dadurch gekennzeichnet, dass** das zumindest eine Kommunikationssystem als Computernetzwerk nach einem der Ansprüche 8 bis 14 ausgebildet ist.

## Claims

1. A method for transmitting messages in a computer network, wherein the computer network comprises nodes (101, 102, 103, 104, 101a, 101b, 102a) that are connected to one another via communication lines (110), e.g. in that in each case two nodes are connected to one another, and wherein the nodes (101, 102, 103, 104, 101a, 101b, 102a) exchange messages with one another, and wherein data (D101, D102, D103) in the form of messages are communicated between the nodes, and wherein
at least two first nodes (101, 102; 102, 103) transmit data (D101, D102; D102, D103) to a common second node (103; 104), wherein the computer network is embodied such that at least one first node (102; 103) is disposed in at least one communication path of a further first transmitting node (101; 102) or of the plurality of further first transmitting nodes to the common second node (103; 104), and wherein
at least one first node (102; 103) -the so-called integration node (102; 103) - that is arranged closer to the common second node (103; 104) than at least one further first node (101; 102) integrates the data (D101; D102) from at least one of the messages of the at least one first node (101; 102) farther away from the common second node (103; 104) into a message generated by the integration node (102; 103), which message this integration node (102; 103) then sends to the common second node (103; 104), **characterized in that**
for the purpose of this integration, the at least one integration node (102; 103), after the transmission of the integration node's own data (D102; D103) to be transmitted, continues with the transmission of the at least one message, a so-called integration message, transmitting these integration node's own data (D102; D103) **in that** it adds either the data to be integrated (D101; D102) of the at least one further node (101; 102) and/or filler data (S102) into this at least one message.

2. The method according to claim 1, **characterized in that** the filler data (S102) are integrated into the at least one integration message according to a defined pattern (PAD, SDF).

3. The method according to claim 1 or 2, **characterized in that** the data (D101, D102, D103) transmitted by the at least two first nodes and the common second node include checksums.

4. The method according to any of claims 1 through 3, **characterized in that** the at least two first nodes and the second node (101, 102, 103) may transmit messages in a time-controlled manner, for example transmit messages at configured times (T1, T2, T3) in a global time.

5. The method according to claim 4, **characterized in that** transmitting nodes (101, 102, 103) have the same time (T1, T2, T3) configured for the transmission, preferably for the send time, for at least one of their messages.

6. The method according to any of claims 1 through 5, **characterized in that** the at least one integration node (102; 103) waits for a configurable or configured time period, and,
- if, within this time period, data (D101; D102) from at least one further first node (101; 102) begin to arrive, the integration node (102; 103) integrates or begins to integrate these data (D101; D102) into the message it generated, preferably immediately after the integration node's own data (D103) or subsequent to filler data (S102) that follow the integration node's own data (D103), and,
- if, within this time period, no data (D101; D102) from further first nodes (101; 102) begin to arrive, the integration node (102; 103) terminates the message it generated and transmits the same to a receiver (103; 104).

7. The method according to any of claims 1 through 6, **characterized in that** the at least one integration node (102; 103) integrates or preferably does not integrate into the message generated by it filler data (S102) arriving from at least one further first node (101; 102).

8. A computer network comprising node (101, 102, 103, 104, 101a, 101b, 102a) that are connected to one another via communication lines (110), e.g. in that in each case two nodes are connected to one another, and wherein the nodes (101, 102, 103, 104, 101a, 101b, 102a) exchange messages with one another, and wherein data (D101, D102, D103) in the form of messages are communicated between the nodes, and wherein
at least two first nodes (101, 102; 102, 103) transmit data (D101, D102; D102, D103) to a common second node (103; 104), wherein the computer network is embodied such that at least one first node (102; 103) is disposed in at least one communication path of a further first transmitting node (101; 102) or of the plurality of further first transmitting nodes to the common second node (103; 104), and wherein
at least one first node (102; 103) -the so-called integration node (102; 103) - that is arranged closer to the common second node (103; 104) than at least one further first node (101; 102) is designed to integrate the data (D101; D102) from at least one of the messages of the at least one first node (101; 102) farther away from the common second node (103; 104) into at least one message generated by the integration node (102; 103), which message this integration node (102; 103) sends to the common second node (103; 104), **characterized in that**
for the purpose of this integration, the at least one integration node (102; 103), after the transmission of the integration node's own data (D102; D103) to be transmitted, continues with the transmission of the at least one message, a so-called integration message, transmitting these integration node's own data (D102; D103) **in that** it adds either the data to be integrated (D101; D102) of the at least one further node (101; 102) and/or filler data (S102) into this at least one message.

9. The computer network according to claim 8, **characterized in that** filler data (S102) are integrated into the at least one integration message according to a defined pattern (PAD, SDF).

10. The computer network according to claim 8 or 9, **characterized in that** the data (D101, D102, D103) transmitted by the at least two first nodes and the common second node include checksums.

11. The computer network according to any of claims 8 through 10, **characterized in that** the at least two first nodes and the second node (101, 102, 103) may transmit messages in a time-controlled manner, for example transmit messages at configured times (T1, T2, T3) in a global time.

12. The method according to claim 11, **characterized in that** sending nodes (101, 102, 103) have the same time (T1, T2, T3) configured for the transmission, preferably for the send time, for at least one of their messages.

13. A computer network according to any of claims 8 through 12, **characterized in that** the at least one integration node (102; 103) waits a configurable or configured time period, and
- if, within this time period, data (D101; D102) from at least one further first node (101; 102) begin to arrive, the integration node (102; 103) integrates or begins to integrate these data (D101; D102) into the message it generated, preferably immediately after the integration node's own data (D103) or subsequent to filler data (S102) that follow the integration node's own data (D103), and,
- if, within this time period, no data (D101; D102) from further first nodes (101; 102) begin to arrive, the integration node (102; 103) terminates the message it generated and transmits the same to a receiver (103; 104).

14. The computer network according to any of claims 8 through 13, **characterized in that** the at least one integration node (102; 103) integrates or preferably does not integrate into the message generated by it filler data (S102) arriving from at least one further first node (101; 102).

15. A real-time computer system, in particular a distributed real-time computer system, that comprises at least one communication system, **characterized in that** the at least one communication system is embodied as a computer network according to any of claims 8 through 14.

## Revendications

1. Procédé pour la transmission de messages dans un réseau informatique, dans lequel le réseau informatique comporte des noeuds (101, 102, 103, 104, 101a, 101b, 102a), lesquels sont reliés entre eux par des lignes de communication (110), par exemple dans lequel à chaque fois deux noeuds sont reliés entre eux, et dans lequel les noeuds (101, 102, 103, 104, 101a, 101b, 102a) échangent des messages entre eux, et dans lequel des données (D101, D102, D103) sous la forme de messages sont communiquées entre les noeuds, et dans lequel
au moins deux premiers noeuds (101, 102 ; 102, 103) envoient des données (D101, D102 ; D102, D103) à un second noeud commun (103 ; 104), dans lequel le réseau informatique est configuré de telle sorte qu'au moins un premier noeud (102 ; 103) se situe dans au moins un chemin de communication d'un premier noeud d'envoi supplémentaire (101 ; 102) ou de la pluralité de premiers noeuds d'envoi supplémentaires au second noeud commun (103 ; 104), et dans lequel
au moins un premier noeud (102 ; 103) - le noeud dit d'intégration (102 ; 103) - qui est situé plus près du second noeud commun (103 ; 104) que d'au moins un autre premier noeud (101 ; 102) intègre les données (D101 ; D102) provenant d'au moins l'un des messages dudit au moins un premier noeud (101 ; 102) retiré en outre du second noeud commun (103 ; 104) dans au moins un message généré par le noeud d'intégration (102 ; 103), que ce noeud d'intégration (102 ; 103) envoie au second noeud commun (103 ; 104), **caractérisé par le fait que**
ledit au moins un noeud d'intégration (102 ; 103), aux fins de cette intégration après la transmission des données de noeud d'intégration propres (D102 ; D103) à transmettre par lui, continue avec la transmission d'au moins un message transmettant ces données de noeud d'intégration propres (D102 ; D103), un message dit d'intégration, par insertion des données (D101 ; D102) à intégrer dudit au moins un premier noeud supplémentaire (101 ; 102) et/ou de données de remplissage (S102) dans ce au moins un message.

2. Procédé selon la revendication 1, **caractérisé par le fait que** des données de remplissage (S102) sont intégrées en fonction d'un motif défini (PAD, SDF) dans ledit au moins un message d'intégration.

3. Procédé selon l'une des revendications 1 ou 2, **caractérisé par le fait que** les données (D101, D102, D103) transmises par lesdits au moins deux premiers noeuds et le second noeud commun comprennent des sommes de contrôle.

4. Procédé selon l'une des revendications 1 à 3, **caractérisé par le fait que** lesdits au moins deux premiers noeuds et le second noeud (101, 102, 103) peuvent transmettre des messages à déclenchement temporel, par exemple transmettre des messages à des moments de temps configurés (T1, T2, T3) dans un temps global.

5. Procédé selon la revendication 4, **caractérisé par le fait que** des noeuds d'envoi (101, 102, 103) ont le même moment du temps (T1, T2, T3) configuré pour la transmission, de préférence pour le temps d'envoi, d'au moins l'un de leurs messages à chaque fois.

6. Procédé selon l'une des revendications 1 à 5, **caractérisé en ce que** ledit au moins un noeud d'intégration (102 ; 103) attend une période de temps configurable ou configurée, et
- si à l'intérieur de cette période de temps, des données (D101, D102) provenant d'au moins un premier noeud supplémentaire (101 ; 102) commencent à arriver, le noeud d'intégration (102 ; 103) intègre ces données (D101 ; D102) dans le message généré par lui ou commence à l'intégrer, de préférence immédiatement après les données de noeud d'intégration propres (D103) ou après des données de remplissage (S102), lesquelles suivent les données de noeud d'intégration propres (D103), et
- si, à l'intérieur de cette période de temps, aucune donnée (D101, D102) ne commence à arriver en provenance de premiers noeuds supplémentaires (101 ; 102), le noeud d'intégration (102 ; 103) termine le message généré par lui et le transmet à un récepteur (103 ; 104).

7. Procédé selon l'une des revendications 1 à 6, **caractérisé en ce que** ledit au moins un noeud d'intégration (102 ; 103) intègre des données de remplissage (S102) arrivant en provenance d'au moins un premier noeud supplémentaire (101 ; 102) dans le message généré par lui ou de préférence n'intègre pas ces données de remplissage.

8. Réseau informatique comportant des noeuds (101, 102, 103, 104, 101a, 101b, 102a), lesquels sont reliés entre eux par des lignes de communication (110), par exemple dans lequel à chaque fois deux noeuds sont reliés entre eux, et dans lequel les noeuds (101, 102, 103, 104, 101a, 101b, 102a) échangent des messages entre eux, et dans lequel des données (D101, D102, D103) sous la forme de messages sont communiquées entre les noeuds, et dans lequel
au moins deux premiers noeuds (101, 102 ; 102, 103) envoient des données (D101, D102 ; D102, D103) à un second noeud commun (103 ; 104), dans lequel le réseau informatique est configuré, de telle sorte qu'au moins un premier noeud (102 ; 103) se situe dans au moins un chemin de communication d'un premier noeud d'envoi supplémentaire (101 ; 102) ou de la pluralité de premiers noeuds d'envoi supplémentaires au second noeud commun (103 ; 104), et dans lequel
au moins un premier noeud (102 ; 103) - le noeud dit d'intégration (102 ; 103) - qui est situé plus près du second noeud commun (103 ; 104) que d'au moins un autre premier noeud (101 ; 102) intègre les données (D101 ; D102) provenant d'au moins l'un des messages dudit au moins un premier noeud (101 ; 102) retiré en outre du second noeud commun (103 ; 104) dans au moins un message généré par le noeud d'intégration (102 ; 103), que ce noeud d'intégration (102 ; 103) envoie au second noeud commun (103 ; 104), **caractérisé par le fait que**
ledit au moins un noeud d'intégration (102 ; 103), aux fins de cette intégration après la transmission des données de noeud d'intégration propres (D102 ; D103) à transmettre par lui, continue avec la transmission d'au moins un message transmettant ces données de noeud d'intégration propres (D102 ; D103), un message dit d'intégration, par insertion des données (D101 ; D102) à intégrer dudit au moins un premier noeud supplémentaire (101 ; 102) et/ou de données de remplissage (S102) dans ce au moins un message.

9. Réseau informatique selon la revendication 8, **caractérisé par le fait que** des données de remplissage (S102) sont intégrées en fonction d'un motif défini (PAD, SDF) dans ledit au moins un message d'intégration.

10. Réseau informatique selon l'une des revendications 8 ou 9, **caractérisé par le fait que** les données (D101, D102, D103) transmises par lesdits au moins deux premiers noeuds et le second noeud commun comprennent des sommes de contrôle.

11. Réseau informatique selon l'une des revendications 8 à 10, **caractérisé par le fait que** lesdits au moins deux premiers noeuds et le second noeud (101, 102, 103) peuvent transmettre des messages à déclenchement temporel, par exemple transmettre des messages à des moments de temps configurés (T1, T2, T3) dans un temps global.

12. Réseau informatique selon la revendication 11, **caractérisé par le fait que** des noeuds d'envoi (101, 102, 103) ont le même moment de temps (T1, T2, T3) configuré pour la transmission, de préférence pour le temps d'envoi, d'au moins l'un de leurs messages à chaque fois.

13. Réseau informatique selon l'une des revendications 8 à 12, **caractérisé par le fait que** ledit au moins un noeud d'intégration (102 ; 103) attend une période de temps configurable ou configurée, et
- si à l'intérieur de cette période de temps, des données (D101, D102) provenant d'au moins un premier noeud supplémentaire (101 ; 102) commencent à arriver, le noeud d'intégration (102 ; 103) intègre ces données (D101 ; D102) dans le message généré par lui ou commence à l'intégrer, de préférence immédiatement après les données de noeud d'intégration propres (D103) ou après des données de remplissage (S102), lesquelles suivent les données de noeud d'intégration propres (D103), et
- si, à l'intérieur de cette période de temps, aucune donnée (D101, D102) ne commence à arriver en provenance de premiers noeuds supplémentaires (101 ; 102), le noeud d'intégration (102 ; 103) termine le message généré par lui et le transmet à un récepteur (103 ; 104).

14. Réseau informatique selon l'une des revendications 8 à 13, **caractérisé par le fait que** ledit au moins un noeud d'intégration (102 ; 103) intègre des données de remplissage (S102) arrivant en provenance d'au moins un premier noeud supplémentaire (101 ; 102) dans le message généré par lui ou de préférence n'intègre pas ces données de remplissage.

15. Système informatique en temps réel, en particulier système informatique en temps réel distribué, lequel comprend au moins un système de communication, **caractérisé par le fait que** ledit au moins un système de communication est configuré en tant que réseau informatique selon l'une des revendications 8 à 14.
